# EUROPÄISCHE PATENTANMELDUNG

(11) **EP 4 124 267 A1**
(43) Veröffentlichungstag der Anmeldung: **01.02.2023**
(21) Anmeldenummer: 22179100.7
(22) Anmeldetag: 15.06.2022
(51) Int. Cl.: A47J 31/44

(54) **VERFAHREN ZUM ERMITTELN EINES FÜLLSTANDES, STEUERVORRICHTUNG UND GETRÄNKEZUBEREITUNGSGERÄT**

(30) Priorität: 26.07.2021 DE 102021119230
(71) Anmelder: Miele & Cie. KG, 33332 Gütersloh (DE)
(72) Erfinder: Tembaak, Jutta, 49492 Westerkappeln (DE); Janson, Thomas, 33332 Gütersloh (DE)

(57) **Zusammenfassung**

Die Erfindung betrifft ein Verfahren zum Ermitteln eines Füllstandes einer Flüssigkeit in einem Gefäß (145) für ein Getränkezubereitungsgerät (100), wobei das Getränkezubereitungsgerät (100) eine Bilderfassungseinrichtung (150) aufweist. Das Verfahren weist einen Schritt des Einlesens eines Bildsignals über eine Schnittstelle zu der Bilderfassungseinrichtung (150) auf, wobei das Bildsignal ein Abbild des Gefäßes (145) umfasst. Ferner weist das Verfahren einen Schritt des Bestimmens eines Füllstandsignals unter Verwendung des Bildsignals auf, wobei das Füllstandsignal den Füllstand der Flüssigkeit in dem Gefäß (145) repräsentiert.

## Beschreibung

Die Erfindung betrifft ein Verfahren zum Ermitteln eines Füllstandes, eine Steuervorrichtung und ein Getränkezubereitungsgerät.

Die DE 10 2017 122 722 A1 offenbart einen Getränkeautomaten mit Sensoreinrichtung zur Erfassung eines Füllstandes in einem Vorratsbehälter. Die Erfassung erfolgt mit einer kapazitiven Messung. Die DE 10 2015 102 590 A1 offenbart einen Getränkeautomaten und ein Verfahren zur Messung der Gewichtskraft eines Vorratsbehälters in einem derartigen Getränkeautomaten.

Der Erfindung stellt sich die Aufgabe ein verbessertes Verfahren zum Ermitteln eines Füllstandes, eine verbesserte Steuervorrichtung und ein verbessertes Getränkezubereitungsgerät zu schaffen.

Erfindungsgemäß wird diese Aufgabe durch ein Verfahren zum Ermitteln eines Füllstandes, eine Steuervorrichtung und ein Getränkezubereitungsgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Füllstand eines Gefäßes sehr genau und kontaktlos erfasst werden kann.

Ein entsprechendes Verfahren zum Ermitteln eines Füllstandes einer Flüssigkeit in einem Gefäß für ein Getränkezubereitungsgerät, wobei das Getränkezubereitungsgerät eine Bilderfassungseinrichtung aufweist, weist die folgenden Schritte auf:
Einlesen eines Bildsignals über eine Schnittstelle zu der Bilderfassungseinrichtung, wobei das Bildsignal ein Abbild des Gefäßes umfasst; und
Bestimmen eines Füllstandsignals unter Verwendung des Bildsignals, wobei das Füllstandsignal den Füllstand der Flüssigkeit in dem Gefäß repräsentiert.

Unter einem Getränkezubereitungsgerät kann ein Kaffeevollautomat verstanden werden, zum Zubereiten von Heißgetränken, beispielsweise Kaffee. Bei einer Flüssigkeit kann es sich um einen Getränkezusatz, beispielsweise Milch handeln. Die Flüssigkeit befindet sich dazu in einem separaten Gefäß, beispielsweise einem Milchgefäß. Das Milchgefäß kann beispielsweise von einem Aufnahmeelement des Getränkezubereitungsgerätes aufgenommen werden. Bei einer Bilderfassungseinrichtung kann es sich beispielsweise um eine Kamera handeln, die an einem Auslauf des Getränkezubereitungsgerätes angeordnet sein kann. Die Bilderfassungseinrichtung kann das Gefäß und den Bereich unterhalb des Auslaufes erfassen. Unter einem Füllstand kann sowohl die Füllhöhe der vorhandenen Flüssigkeit in dem Gefäß verstanden werden, als auch das Füllvolumen der Flüssigkeit.

Das hier vorgestellte Verfahren, das auch als Michfüllstandüberwachung mittels Kamera im Einbaukaffeevollautomaten bezeichnet werden kann, ermöglicht eine Erfassung eines Füllstandes in dem Gefäß. Der beschriebene Ansatz kann vorteilhafterweise im Zusammenhang mit einem Getränkezubereitungsgerät eingesetzt werden, das ein Milchgefäß verwendet, das direkt mit dem Getränkezubereitungsgerät verbunden ist, so dass bei milchhaltigen Getränken die Milch vom Getränkezubereitungsgerät aus dem Milchgefäß gezogen werden kann. Das Getränkezubereitungsgerät kann erkennen, ob das Milchgefäß eingesetzt ist oder nicht. Vorteilhafterweise kann das Getränkezubereitungsgerät mit dem hier beschriebenen Ansatz ferner erkennen, ob auch genügend Milch im Gefäß vorhanden ist.

Beispielsweise kann mit dem hier vorgestellten Ansatz berechnet werden, ob für das nächste milchhaltige Getränk die Milch noch ausreicht. Entsprechend kann damit dem Benutzer diesbezüglich ein Hinweis gegeben werden, wenn die Milch nicht mehr ausreicht. Milchhaltige Getränke benötigen in der Regel recht viel Milch. Bei dem hier vorgestellten Ansatz ist es nicht nötig, dass der Benutzer einen Überblick über die noch vorhandene Milch im Gefäß behält. Getränkeabbrüche werden vermieden und die Benutzerzufriedenheit erhöht. Somit erhält der Benutzer deutlich mehr Komfort und Bedienunterstützung. Außerdem kann der Ansatz kostengünstig umgesetzt werden, da eine Bilderfassungseinrichtung häufig am Gerät bereits verbaut ist und keine zusätzliche Sensorik erforderlich ist.

Im Schritt des Bestimmens kann das Füllstandsignal bestimmt werden, wenn ein Gefäßsignal ein Vorhandensein des Gefäßes anzeigt.

Das Verfahren kann einen Schritt des Ermittelns des Gefäßsignals unter Verwendung des Bildsignals aufweisen. Das Gefäßsignal kann dabei ein Vorhandensein eines Gefäßes an dem Getränkezubereitungsgerät repräsentieren. Dies bietet den Vorteil, dass keine weitere Sensoreinrichtung nötig ist, um das Gefäßsignal zu ermitteln. Die Bilderfassungseinrichtung kann stattdessen ein Bildsignal erfassen, auf dessen Grundlage das Gefäßsignal ermittelt werden kann. Dadurch kann beispielsweise ein ansonsten benötigter zusätzlicher Erkennungssensor entfallen, was die Herstellungskosten senkt.

Das Verfahren kann ferner einen Schritt des Einlesens eines Formsignals aufweisen, das eine Form des Gefäßes repräsentiert. Im Schritt des Bestimmens kann dann unter Verwendung des Bildsignals ein Füllhöhensignal bestimmt werden, das eine Füllhöhe der Flüssigkeit in dem Gefäß repräsentiert, und das Füllstandsignal unter Verwendung des Füllhöhesignals und des Formsignals bestimmen. Mittels des Formsignals kann eine Form des Gefäßes bestimmt werden und somit auch das Füllvolumen. Das Füllstandsignal repräsentiert den Füllstand der Flüssigkeit in dem Gefäß und kann mittels des Formsignals und des Füllhöhensignals bestimmt werden. Dadurch kann das Getränkezubereitungsgerät berechnen, welche Füllmenge vorhanden ist.

Das Verfahren kann einen Schritt des Einlesens eines Getränkeauswahlsignals aufweisen, das eine erforderliche Flüssigkeitsmenge der Flüssigkeit für ein ausgewähltes Getränk definiert und mit einem Schritt des Bereitstellens eines Getränkezubereitungssignals zum Zubereiten des Getränks, wenn der Füllstand in dem Gefäß für die Flüssigkeitsmenge reicht. Dies bietet den Vorteil, dass das Getränkezubereitungsgerät erkennen kann, ob der vorhandene Füllstand im Gefäß für ein ausgewähltes Getränk, beispielsweise einen Milchkaffee noch ausreicht. Wenn der vorhandene Füllstand nicht ausreicht, kann der Benutzer einen Hinweis erhalten, dass er zum Beispiel Milch in das Gefäß nachfüllen soll. Dadurch können Getränkebezüge mit zu wenig Milch vermieden werden. Die Benutzerzufriedenheit kann somit verbessert werden.

Das Verfahren kann einen Schritt des Erfassens des Bildsignals aufweisen. Das Bildsignal kann unter Verwendung der Bilderfassungseinrichtung erfasst werden. Dabei kann ein Erfassungsbereich der Bilderfassungseinrichtung einen Aufnahmebereich für das Gefäß und einen Getränkeausgabebereich umfassen. Dies bietet den Vorteil, dass mit nur einer Bilderfassungseinrichtung zwei benachbarte Bereiche überwacht werden können. Dadurch können Herstellungskosten eingespart werden.

Die Bilderfassungseinrichtung kann ein Weitwinkelobjektiv aufweisen. Dies bietet den Vorteil, dass die Bilderfassungseinrichtung einen Blickwinkel von ca. 180° Grad aufweisen kann und somit einen großen Aufnahmebereich erfassen kann.

Eine Steuervorrichtung kann ausgebildet sein, um die Schritte des Verfahrens in entsprechenden Einheiten auszuführen und/oder anzusteuern.

Ein entsprechendes Getränkezubereitungsgerät mit einer Steuervorrichtung kann eine zuvor genannte Bilderfassungseinrichtung aufweisen.

Auch wenn der beschriebene Ansatz anhand eines Haushaltgeräts beschrieben wird, kann das hier beschriebene Verfahren und das hier beschriebene Getränkezubereitungsgerät entsprechend im Zusammenhang mit einem gewerblichen oder professionellen Gerät, beispielsweise einem Gastronomiegerät eingesetzt werden.

Der hier vorgestellte Ansatz schafft ferner eine Steuervorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Steuervorrichtung kann die der Erfindung zugrunde liegende Aufgabe schnell und effizient gelöst werden.

Die Steuervorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Steuervorrichtung bereitgestellt werden kann. Die Steuervorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuervorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine Darstellung eines Getränkezubereitungsgerätes gemäß einem Ausführungsbeispiel;
- Figur 2: eine Darstellung eines Getränkezubereitungsgerätes gemäß einem weiteren Ausführungsbeispiel;
- Figur 3: eine schematische Darstellung eines Ausführungsbeispiels einer Steuervorrichtung eines Getränkezubereitungsgerätes; und
- Figur 4: ein Ablaufdiagramm eines Ausführungsbeispiels eines Verfahrens zum Ermitteln eines Füllstandes.

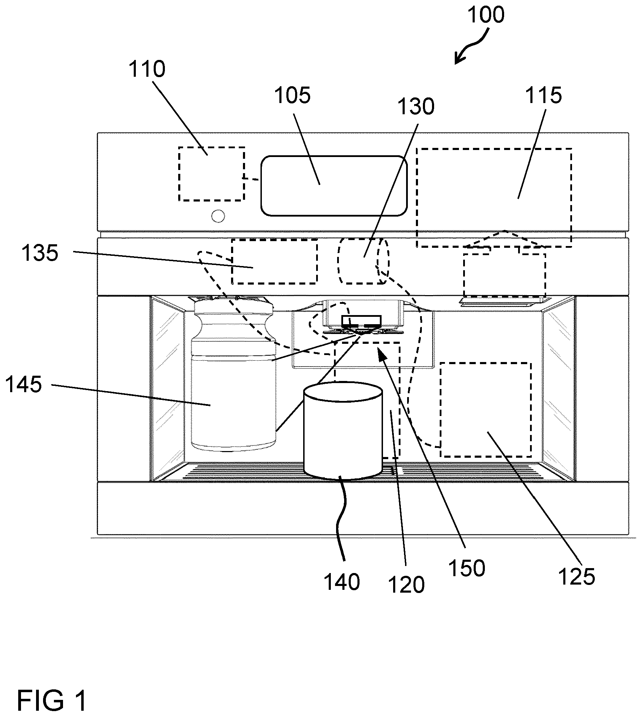

Figur 1 zeigt eine Darstellung eines Getränkezubereitungsgerätes 100 gemäß einem Ausführungsbeispiel. Bei dem Getränkezubereitungsgerät 100 kann es sich beispielsweise um einen Kaffeevollautomaten handeln, der ausgebildet ist, um ein Getränk, beispielsweise einen Kaffee, zuzubereiten. Dazu wählt der Benutzer über eine Bedien- und Anzeigeeinrichtung 105 das gewünschte Getränk aus, beispielsweise einen Kaffee. Eine Steuervorrichtung 110 steuert die Zubereitung des Getränkes. In einem Bohnenbehälter 115 befinden sich beispielsweise Kaffeebohnen für die Zubereitung des Kaffees. Die Kaffeebohnen werden zermahlen, sodass Kaffeepulver entsteht, welcher in eine Brüheinheit 120 gelangt. Das Getränkezubereitungsgerät 100 weist einen Wassertank 125 auf, in dem sich eine Flüssigkeit befindet, die für die Zubereitung des Getränkes benötigt wird. Der Wassertank 125 ist beispielsweise ausgebildet, um in eine Aussparung des Getränkezubereitungsgeräts 100 eingeschoben zu werden. Die Flüssigkeit wird mit einer Pumpe 130 zu einem Heizblock 135 gepumpt. In dem Heizblock 135 wird die Flüssigkeit aufgeheizt. Anschließend wird die aufgeheizte Flüssigkeit durch die Brüheinheit 120 geleitet, in der sich das Kaffeepulver befindet. Der nun fertige Kaffee fließt aus einem Auslauf aus dem Getränkezubereitungsgerät 100 in einen Behälter 140, wobei sich der Behälter 140 unterhalb des Auslaufs befindet und beispielhaft als Tasse ausgeformt ist.

Das Getränkezubereitungsgerät 100 weist ferner ein Gefäß 145 auf, das ausgebildet ist, um beispielsweise Milch zu bevorraten. An dem Auslauf des Getränkezubereitungsgeräts 100 ist beispielhaft eine Bilderfassungseinrichtung 150 angebracht, die als Kamera ausgeformt ist. Die Bilderfassungseinrichtung 150 ist ausgebildet, um das Gefäß 145 zu erfassen und einen Füllstand der Milch in dem Gefäß 145 zu ermitteln. Das Gefäß 145 wird beispielhaft von einem Aufnahmeelement des Getränkezubereitungsgerätes 100 aufgenommen, sodass ein Verrutschen des Gefäßes 145 verhindert wird. Das Gefäß 145 ist beispielhaft neben dem Behälter 140 angeordnet.

Die Bilderfassungseinrichtung 150 weist gemäß einer Ausführungsform ein Weitwinkelobjektiv auf. Dadurch ist es möglich, dass die Bilderfassungseinrichtung 150 sowohl einen Aufnahmebereich für das Gefäß 145 als auch einen Getränkeausgabebereich erfasst.

Wenn der Benutzer beispielsweise einen Milchkaffe auswählt, bezieht es Getränkezubereitungsgerät 100 die dafür benötigte Milch aus dem Gefäß 145. Die Bilderfassungseinrichtung 150 erfasst dazu den Füllstand der Milch in dem Gefäß 145. Wenn genügend Milch in dem Gefäß 145 vorhanden ist, wird der Milchkaffee zubereitet. Reicht die Milch in dem Gefäß 145 für den gewünschten Getränkebezug nicht mehr aus, erhält der Benutzer gemäß einem Ausführungsbeispiel einen entsprechenden Hinweis, dass er zum Beispiel Milch in das Gefäß 145 einfüllen soll.

Somit kann der Füllstand der Flüssigkeit in dem Gefäß 145 optisch erfasst werden. Eine solche optische Erfassung kann für unterschiedliche Getränkezubereitungsgeräte 100 verwendet werden, sodass das beschriebene Getränkezubereitungsgerät 100 nur beispielhaft gewählt ist.

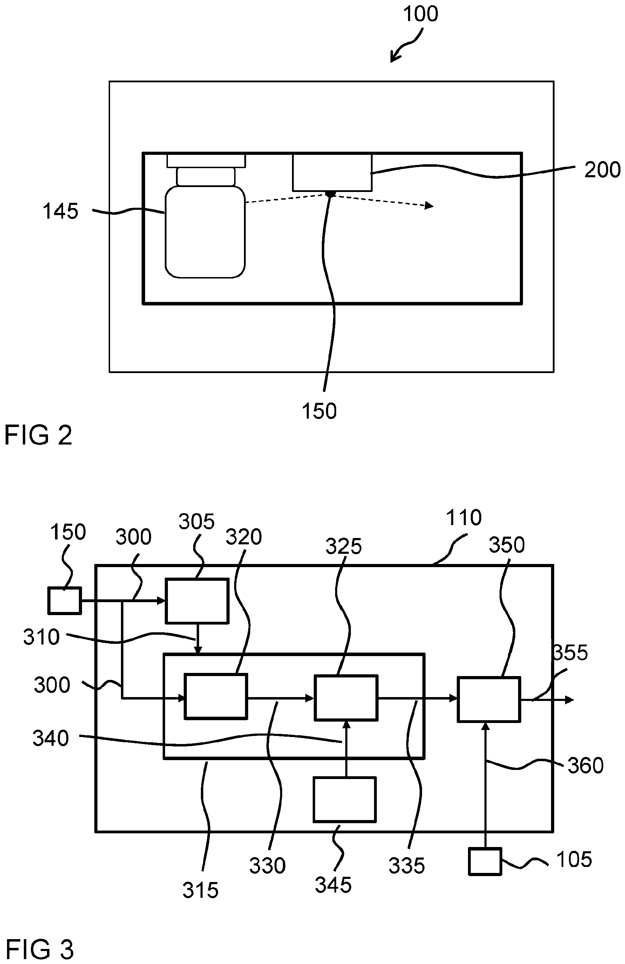

Figur 2 zeigt eine Darstellung eines Getränkezubereitungsgeräts 100 gemäß einem weiteren Ausführungsbeispiel. Bei dem Getränkezubereitungsgerät 100 kann es sich um das in Figur 1 beschriebene Getränkezubereitungsgerät 100 handeln. Die Bilderfassungseinrichtung 150 ist beispielhaft an dem Auslauf 200 des Getränkezubereitungsgerätes 100 angeordnet und weist ein Weitwinkelobjektiv auf. Somit können sowohl das Gefäß 145 als auch der Getränkeausgabebereich unterhalb des Auslaufs 200 unter Verwendung der einzigen Bilderfassungseinrichtung 150 erfasst werden.

Das Objektiv der Bilderfassungseinrichtung 150 hat beispielhaft einen Blickwinkel von ca. 180°. Durch diesen großen Blickwinkel sieht die Bilderfassungseinrichtung 150 auch das Gefäß 145 und erkennt den Milchfüllstand. So kann unter Verwendung eines von der Bilderfassungseinrichtung 150 bereitgestellten Bildsignals ausgewertet werden, ob das Gefäß 145 gefüllt ist und welche Füllmenge vorhanden ist. Damit berechnet das Getränkezubereitungsgerät 100 ob die Milch für ein bestimmtes Getränk noch reicht, da das Gefäß 145 definiert ist, wird einer Höhe ein bestimmtes Volumen zugeordnet. Gleichzeitig wird auch überwacht, ob das Gefäß 145 überhaupt eingesetzt wurde, so dass weitere Erkennungssensoren entfallen können.

Figur 3 zeigt eine schematische Darstellung eines Ausführungsbeispiels einer Steuervorrichtung 110 eines Getränkezubereitungsgerätes. Die Steuervorrichtung 110 kann beispielsweise im Zusammenhang mit einem Getränkezubereitungsgerät eingesetzt werden, wie es anhand der vorangegangenen Figuren beschrieben wurde. Die Steuervorrichtung 110 ist ausgebildet, um unter Verwendung eines Bildsignals 300 den Füllstand einer Flüssigkeit in einem Gefäß für das Getränkezubereitungsgerät zu erfassen.

Dazu weist die Steuervorrichtung 110 eine Schnittstelle zum Einlesen des Bildsignals 300 auf. Das Bildsignal 300 wird von einer Bilderfassungseinrichtung 150 bereitgestellt, die beispielsweise als Kamera ausgeformt ist, und repräsentiert ein Abbild eines Gefäßes. Gemäß einem Ausführungsbeispiel wird in einer Ermittlungseinrichtung 305 ein Gefäßsignal 310 unter Verwendung des Bildsignals 300 ermittelt. Das Gefäßsignal 310 repräsentiert ein Vorhandensein eines Gefäßes an dem Getränkezubereitungsgerät. Gemäß einem weiteren Ausführungsbeispiel, das in Figur 3 nicht dargestellt ist, wird das Gefäßsignal 310 über eine Schnittstelle zu einer separaten Sensoreinrichtung eingelesen. Dabei befindet sich eine solche Sensoreinrichtung beispielhaft an einem Aufnahmeelement des Getränkezubereitungsgerätes und kann dadurch registrieren, wenn ein Gefäß in das Aufnahmeelement eingeschoben wird.

Die Steuervorrichtung 110 weist ferner eine Bestimmungseinrichtung 315 mit einer Einrichtung 320 zum Bestimmen der Füllhöhe und einer Einrichtung 325 zum Bestimmen des Füllstandes. In der Einrichtung 320 zum Bestimmen der Füllhöhe wird ein Füllhöhesignal 330 unter Verwendung des Bildsignals 300 bestimmt. Das Füllhöhesignal 330 repräsentiert eine Füllhöhe der Flüssigkeit in dem Gefäß. In der Einrichtung 325 zum Bestimmen des Füllstands wird ein Füllstandsignal 335 unter Verwendung des Füllhöhesignals 330 und unter Verwendung eines Formsignals 340 bestimmt. Das Formsignal 340 wird von einer Speichereinrichtung 345 an die Einrichtung 325 zum Bestimmen des Füllstands bereitgestellt und repräsentiert die Form des Gefäßes. Das Füllstandsignal 335 repräsentiert den Füllstand der Flüssigkeit in dem Gefäß. Optional wird das Formsignal 340 unter Verwendung des Bildsignals 300 bestimmt.

Die Steuervorrichtung 110 weist ferner eine Bereitstellungseinrichtung 350 auf. In der Bereitstellungseinrichtung 350 wird unter Verwendung des Füllstandsignals 335 ein Getränkezubereitungssignal 355 bereitgestellt. Das Getränkezubereitungssignal 355 wird unter Verwendung eines Getränkeauswahlsignals 360 bereitgestellt. Das Getränkeauswahlsignal 360 definiert eine erforderliche Flüssigkeitsmenge der Flüssigkeit für ein ausgewähltes Getränk und wird von einer Bedieneinrichtung 105 bereitgestellt. Der Benutzer wählt über die Bedieneinrichtung 105 an dem Getränkezubereitungsgerät ein Getränk aus, beispielsweise einen Milchkaffee. Das dadurch entstehende Getränkeauswahlsignal 360 wird an die Bereitstellungseinrichtung 350 geleitet und zum Bereitstellen des Getränkezubereitungssignals 355 verwendet

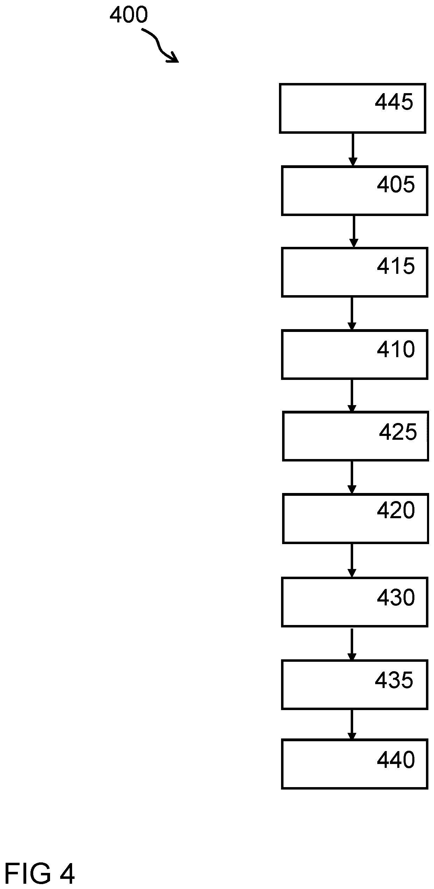

Figur 4 zeigt ein Ablaufdiagramm eines Verfahrens 400 zum Ermitteln eines Füllstandes einer Flüssigkeit in einem Gefäß für ein Getränkezubereitungsgerät, wie es beispielsweise anhand der vorangegangenen Figuren beschrieben ist.

Das Verfahren 400 umfasst einen Schritt 405 des Einlesens eines Bildsignals über eine Schnittstelle zu der Bilderfassungseinrichtung, wobei das Bildsignal ein Abbild des Gefäßes umfasst. Das Verfahren 400 umfasst außerdem einen Schritt 410 des Bestimmens eines Füllstandsignals unter Verwendung des Bildsignals, wobei das Füllstandsignal den Füllstand der Flüssigkeit in dem Gefäß repräsentiert.

Gemäß einem Ausführungsbeispiel wird in einem Schritt 410 des Bestimmens das Füllstandsignal bestimmt, wenn ein Gefäßsignal ein Vorhandensein des Gefäßes anzeigt. Gemäß einem weiteren Ausführungsbeispiel weist das Verfahren 400 einen Schritt 415 des Ermittelns des Gefäßsignals unter Verwendung des Bildsignals auf.

Das Verfahren 400 umfasst einen Schritt 420 des Einlesens eines Formsignals, das eine Form des Gefäßes repräsentiert. Im Schritt 425 des Bestimmens wird unter Verwendung des Bildsignals ein Füllhöhensignal bestimmt, das eine Füllhöhe der Flüssigkeit in dem Gefäß repräsentiert. Im Schritt 430 des Bestimmens wird das Füllstandsignal unter Verwendung des Füllhöhesignals und des Formsignals bestimmt.

Gemäß einem weiteren Ausführungsbeispiel wird in einem Schritt 435 des Einlesens ein Getränkeauswahlsignal eingelesen, das eine erforderliche Flüssigkeitsmenge der Flüssigkeit für ein ausgewähltes Getränk definiert. In einem Schritt 440 des Bereitstellens wird ein Getränkezubereitungssignal zum Zubereiten des Getränks bereitgestellt, wenn der Füllstand in dem Gefäß für die Flüssigkeitsmenge reicht.

Das Verfahren 400 umfasst ferner einen Schritt 445 des Erfassens eines Bildsignals, unter Verwendung der Bilderfassungseinrichtung. Der Erfassungsbereich der Bilderfassungseinrichtung umfasst beispielhaft einen Aufnahmebereich für das Gefäß und einen Getränkeausgabebereich.

## Patentansprüche

1. Verfahren (400) zum Ermitteln eines Füllstandes einer Flüssigkeit in einem Gefäß (145) für ein Getränkezubereitungsgerät (100), wobei das Getränkezubereitungsgerät (100) eine Bilderfassungseinrichtung (150) aufweist und wobei das Verfahren (400) die folgenden Schritte aufweist:
Einlesen (405) eines Bildsignals (300) über eine Schnittstelle zu der Bilderfassungseinrichtung (150), wobei das Bildsignal (300) ein Abbild des Gefäßes (145) umfasst;
Bestimmen (410) eines Füllstandsignals (335) unter Verwendung des Bildsignals (300), wobei das Füllstandsignal (335) den Füllstand der Flüssigkeit in dem Gefäß (145) repräsentiert.

2. Verfahren (400) gemäß Anspruch 1, wobei im Schritt (410) des Bestimmens das Füllstandsignal (335) bestimmt wird, wenn ein Gefäßsignal (310) ein Vorhandensein des Gefäßes (145) anzeigt.

3. Verfahren (400) gemäß Anspruch 2, mit einem Schritt (415) des Ermittelns des Gefäßsignals (310) unter Verwendung des Bildsignals (300).

4. Verfahren (400) gemäß einem der vorangegangenen Ansprüche, mit einem Schritt (420) des Einlesens eines Formsignals (340), das eine Form des Gefäßes (145) repräsentiert und wobei im Schritt (425) des Bestimmens unter Verwendung des Bildsignals (300) ein Füllhöhensignal (330) bestimmt wird, das eine Füllhöhe der Flüssigkeit in dem Gefäß (145) repräsentiert, und das Füllstandsignal (335) unter Verwendung des Füllhöhesignals (330) und des Formsignals (340) bestimmt wird.

5. Verfahren (400) gemäß einem der vorangegangenen Ansprüche, mit einem Schritt (435) des Einlesens eines Getränkeauswahlsignals (360), das eine erforderliche Flüssigkeitsmenge der Flüssigkeit für ein ausgewähltes Getränk definiert und mit einem Schritt (440) des Bereitstellens eines Getränkezubereitungssignals (355) zum Zubereiten des Getränks, wenn der Füllstand in dem Gefäß (145) für die Flüssigkeitsmenge reicht.

6. Verfahren (400) gemäß einem der vorangegangenen Ansprüche, mit einem Schritt (445) des Erfassens des Bildsignals (300) unter Verwendung der Bilderfassungseinrichtung (150), wobei ein Erfassungsbereich der Bilderfassungseinrichtung (150) einen Aufnahmebereich für das Gefäß (145) und einen Getränkeausgabebereich umfasst.

7. Verfahren (400) gemäß einem der vorangegangenen Ansprüche, wobei die Bilderfassungseinrichtung (150) ein Weitwinkelobjektiv aufweist.

8. Steuervorrichtung (110), die ausgebildet ist, um die Schritte des Verfahrens (400) gemäß einem der Ansprüche 1 bis 7 in entsprechenden Einheiten auszuführen und/oder anzusteuern.

9. Getränkezubereitungsgerät (100) mit einer Steuervorrichtung (110) gemäß Anspruch 8, wobei das Getränkezubereitungsgerät (100) eine Bilderfassungseinrichtung (150) aufweist.

10. Computer-Programmprodukt mit Programmcode zur Durchführung des Verfahrens (400) nach einem der vorangegangenen Ansprüche, wenn das Computer-Programmprodukt auf einer Steuervorrichtung (110) ausgeführt wird.
